# EUROPEAN PATENT SPECIFICATION

(11) **EP 2 348 279 B1**
(45) Date of publication and mention of the grant of the patent: **03.05.2017**
(21) Application number: 09823275.4
(22) Date of filing: 23.10.2009
(51) Int. Cl.: G01C 21/32, G06K 9/00, G01B 11/02

(54) **ROAD MEASUREMENT DEVICE AND METHOD FOR MEASURING ROAD**
STRASSENVERMESSUNGSVORRICHTUNG UND VERFAHREN ZUR STRASSENVERMESSUNG
DISPOSITIF DE MESURE DE ROUTE ET PROCÉDÉ DE MESURE DE ROUTE

(30) Priority: 28.10.2008 JP 2008277174
(43) Date of publication of application: 27.07.2011
(73) Proprietor: PASCO Corporation, Tokyo 153-0043 (JP)
(72) Inventor: KUROSU, Hideaki, Tokyo 153-0043 (JP); KISHIDA, Masanori, Tokyo 153-0043 (JP)
(74) Representative: Huebner, Stefan Rolf
(86) International application number: PCT/JP2009/005582
(87) International publication number: WO 2010/050162

(56) References cited:
- JP-A- 8 080 791
- JP-A- 9 005 078
- JP-A- 2000 161 919
- JP-A- 2002 344 963
- JP-B1- 4 160 106
- US-A1- 2001 018 640
- MORGENTHALER ET AL: "Range-video fusion and comparison of inverse perspective algorithms in static images", IEEE TRANSACTIONS ON SYSTEMS, MAN, AND CYBERNETICS, vol. 20, no. 6, 1 January 1990 (1990-01-01), pages 1301-1312, XP055076325, ISSN: 0018-9472, DOI: 10.1109/21.61202
- BERTOZZI M ET AL: "Stereo Vision-Based Start-Inhibit for Heavy Goods Vehicles", INTELLIGENT VEHICLES SYMPOSIUM, 2006 IEEE MEGURO-KU, JAPAN 13-15 JUNE 2006, PISCATAWAY, NJ, USA,IEEE, 13 June 2006 (2006-06-13), pages 350-355, XP010937038, DOI: 10.1109/IVS.2006.1689653 ISBN: 978-4-901122-86-3
- G. TOULMINET ET AL: "Vehicle detection by means of stereo vision-based obstacles features extraction and monocular pattern analysis", IEEE TRANSACTIONS ON IMAGE PROCESSING, vol. 15, no. 8, 1 August 2006 (2006-08-01) , pages 2364-2375, XP055076056, ISSN: 1057-7149, DOI: 10.1109/TIP.2006.875174
- W.WALDO WAKEFIELD ET AL: "The use of a Canadian (perspective) grid in deep-sea photography", DEEP SEA RESEARCH PART A. OCEANOGRAPHIC RESEARCH PAPERS, vol. 34, no. 3, 1 March 1987 (1987-03-01), pages 469-478, XP055076353, ISSN: 0198-0149, DOI: 10.1016/0198-0149(87)90148-8

## Description

### FIELD OF THE INVENTION

The invention relates to a road measurement device and a method for measuring a road, and more particularly to a road measurement device and a method for measuring a road that photograph a road surface of a road and a roadside to generate a scale image for checking road width and the like on a road image.

### DESCRIPTION OF THE RELATED ART

Conventionally, there is proposed a technique for generating map information and the like used for road management, automobile traffic control and the like by taking video at locations on a road. For example, the Japanese Patent Application Laid-Open No. 2007-206099 discloses a map creation support system that obtains, by a measurement vehicle, positional information and images to create a map.

[Patent Document 1] Japanese Patent Application Laid-Open No. 2007-206099

However, the above-described conventional technique is not configured to measure road width and the like using an image photographed by a photographing means. Hence, the technique does not consider the point that, in a case where the photographing conditions of the photographing means, such as a camera, placed on a vehicle (the height from a road surface and the photographing direction) change in accordance with the weight of a driver of the vehicle or the posture during traveling, the length of a photographed object such as a road in an image changes. Conventionally, road measurement is performed by photographing a road and the like by a measurement vehicle such that a photographing device, a GPS receiver and the like are mounted on a four-wheel automobile. However, in roads with a narrow width (for example, roads specified in the Japanese Building Standards Law, Article 42, Paragraph 2), there may be trouble with passage of the measurement vehicle, and thus there is another problem that road measurement may not be able to be performed.

In the article "Range-Video Fusion and Comparison of Inverse Perspective Algorithms in Static Images", IEEE Transactions of Systems, Man and Cybernetics, Vol. 20 (1990), David Morgenthaler et al. describe how heuristic assumptions may be avoided if actively scanned laser range data are used to determine the three-dimensional space location of features in a two-dimensional image. Data gathered from a video camera is combined with an ERIM laser range scanner for accurate three-dimensional descriptions of roads. Various heuristic inverse perspective algorithms are compared with each other in terms of accuracy, failure situations, and estimated computational speed.

A robust method for obstacle detection with stereo cameras is disclosed in "Stereo Vision-Based Start-Inhibit for Heavy Goods Vehicles", Intelligent Vehicles Symposium 2006, Tokyo, Japan by Massimo Bertozzi et al. A dense grid is used to calibrate arbitrarily aligned cameras. A direct mapping between image pixels and world points is made to remove lens distortions and perspective. After a transformation phase, left and right images are compared and the differences are analysed using a polar histogram. The proposed algorithm is intended for automotive applications, in particular for detecting obstacles in blind spot areas around heavy goods vehicles.

The US patent application US 2001/0018640 A1 discloses an obstacle detection apparatus for self-controlled robots or vehicles. A distance sensor measures the distance of each measurement point of objects existing in a visual field, obtaining three-dimensional coordinates for each point. The measurement points are projected onto predetermined horizontal and vertical planes which are divided into grid cells. A three-dimensional histogram is generated indicating the distribution of measurement points in the grid cells. The histogram is converted into binary data by comparison with predetermined threshold values. From the binary data, obstacles are extracted generating an obstacle map, by which the positional relationship between the distance sensor and each obstacle is determined.

In the article "Fast and accurate stereo vision-based estimation of 3D position and axial motion of road obstacles", published 2004 in the International Journal of Image and Graphics, Vol. 4, G. Toulminet, et al. present a stereo vision-based system that detects and tracks road obstacles, as well as computes their 3D position and their axial motion. The system constructs axial motion maps and computes the inclination angles of 3D straight segments.

In "The use of a Canadian (perspective) grid in deep-sea photography", Deep-Sea Research, Vol. 34 (1987), W. Waldo Wakefield et al. describe a method to accurately and precisely calculate the sizes and densities of animals and other objects. The inclination of a remote camera system in deep-sea over rough topography can cause erroneous calculations of size. This error is calculated using a Canadian grid.

### SUMMARY OF THE INVENTION

The invention is made in view of the above-described conventional problems, and an object of the invention is to provide a road measurement method capable of accurately measuring road width and the like in an image even if a road is narrow in width.

In order to achieve the above described object, according to a first aspect of the present invention, there is provided a road measurement method wherein photographing means photograph a road surface of a road and a roadside at every predetermined time; scale formation means form, by a predetermined processing procedure, a scale image on a road image photographed by the photographing means, from changes in a height of the photographing means from the road surface and changes in an angle that a photographing direction of the photographing means forms with a direction parallel to the road surface, wherein the scale image is a grid image where part of the image is selected at the intervals of predetermined length; a measurement vehicle holds the photographing means and the scale formation means and travels on the road, the road being a photographing target, wherein when the measurement vehicle changes its traveling direction, the scale formation means rotates the scale image in accordance with a rotation angle at which the photographing means rotates using the photographing direction as an axis, such that the scale image is parallel to the road surface in the road image; and a photographing time accepting unit accepts a distance travelled by the measurement vehicle from a rangefinder through an input interface and outputs and instructional signal every predetermined travelled distance.

According to a second aspect of the invention, there is provided the road measurement method according to the first aspect, wherein the processing procedure includes a table that holds formation parameters of a scale image, for each set of a height of the photographing means from a road surface and an angle that a photographing direction of the photographing means forms with a direction parallel to the road surface.

According to a third aspect of the invention, there is provided the road measurement method according to the first or second aspects, wherein the scale image is a grid image wherein rectangles of a predetermined size are arranged side by side on a horizontal plane of the road image.

According to a fourth aspect of the invention, there is provided the road measurement method according to any one of the first to third aspects, wherein the photographing means photographs a predetermined number of images between the predetermined time, and controls brightness of an image obtained at every predetermined time, based on a change in brightness between the images.

According to a fifth aspect of the invention, there is provided the road measurement method according to any one of the first to fourth aspects, wherein the measurement vehicle is any one of a motorcycle, a small motor tricycle, and a bicycle.

According to a sixth aspect of the invention, there is provided the road measurement method according to any one of the first to fifth aspects, wherein the measurement vehicle includes an input device for inputting instruction information to the photographing means during traveling.

According to the first, third and fifth aspects, even if a road is narrow in width, road width and the like in an image can be accurately measured.

According to the second aspect, a scale image can be easily formed.

According to the first aspect, even when the measurement vehicle leans, road width and the like in an image can be accurately measured.

According to the fourth aspect, the brightness of a road image can be controlled.

According to the sixth aspect, even during driving of the measurement vehicle, instruction information can be easily input.

### BRIEF DESCRIPTION OF THE DRAWINGS

FIG. 1 is a diagram showing an exemplary configuration of a measurement vehicle according to the embodiment;
FIG. 2 is a partial perspective view of a drive operating portion of the measurement vehicle;
FIG. 3 is a diagram showing an example of the hardware configuration of a computer composing a control device contained in a control box;
FIG. 4 is a functional block diagram of a road measurement device according to the embodiment;
FIGS. 5a and 5b are diagrams showing examples of road measurement results obtained by the road measurement device according to the embodiment;
FIG. 6 is a diagram showing a panel used for calibration of a lens of a camera constituting a photographing means;
FIG. 7 is an illustrative diagram of a relationship between a height of the camera, which constitutes the photographing means, from a road surface and an angle that a photographing direction forms with a direction parallel to the road surface, and a length photographed by the photographing means;
FIG. 8 is a diagram showing an example of a photographed screen which is photographed by the photographing means when calibration is performed;
FIG. 9 is a diagram showing an example of a table of formation parameters generated by a calibration unit;
FIG. 10 is an illustrative diagram of movements made by the photographing means that rotates using a photographing direction as an axis when the measurement vehicle changes its traveling direction;
FIG. 11 is a diagram showing an example of a photographed screen obtained when the photographing means leans at a rotation angle;
FIG. 12 is a flowchart of an exemplary operation of the road measurement device according to the embodiment.

### DESCRIPTION OF REFERENCE SIGNS

10: photographing means; 11: photographing height and angle measuring unit; 12: coordinate obtaining device; 14: control box; 16: handlebar; 18: brake; 20: accelerator; 22: instrument panel; 24: input device; 26: rangefinder; 28: control device; 30: CPU; 32: RAM; 34: ROM; 36: input interface; 38: display device; 40: hard disk device; 42: bus; 44: image obtaining unit; 46: photographing height and angle obtaining unit; 48: calibration unit; 50: scale forming unit; 52: photographing time accepting unit; 54: instruction input accepting unit; 56: coordinate information obtaining unit; 100: measurement vehicle; 102a: front wheel; 102b: rear wheel; and 104: drive operating portion.

### DESCRIPTION OF THE EXEMPLARY EMBODIMENT

An exemplary embodiment of the present invention (referred to as an embodiment) will be described below in accordance with the drawings.

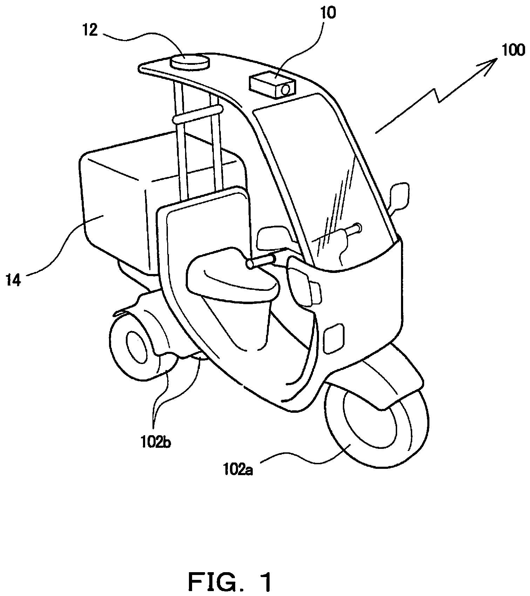

FIG. 1 shows an exemplary configuration of a measurement vehicle according to the embodiment. In FIG. 1, for a measurement vehicle 100, for example, a motorcycle, a small motor tricycle, or a bicycle can be used. An example in FIG. 1 shows a small motor tricycle of, for example, a type equipped with an engine with a displacement in the order of 50 cm³ and having one front wheel 102a and two rear wheels 102b, but the measurement vehicle 100 is not limited thereto. In a case where the measurement vehicle 100 is a motorcycle or a bicycle, it has one front wheel 102a and one rear wheel 102b.

As shown in FIG. 1, the measurement vehicle 100 has mounted thereon a photographing means 10 configured by a CCD camera and the like; a coordinate obtaining device 12 configured by a GPS receiver and the like; and a control box 14. The control box 14 contains therein a control device 28 constituted by a computer and the like; and a photographing height and angle measuring unit 11 that measures a height of the photographing means 10 from a road surface, an angle that a photographing direction forms with a direction parallel to the road surface, and an angle at which the photographing means 10 rotates using the photographing direction as an axis.

The photographing means 10 photographs a road image including a road surface of a road and a roadside at every predetermined time. Here, the "predetermined time" refers to a time at which the measurement vehicle 100 has advanced a predetermined distance since the last photographing, or a time at which a predetermined period of time has elapsed since the last photographing. In the case of using distance, distance is obtained from a rangefinder 26 which will be described later. In the case of using time, time is obtained from a timer and the like. In addition, as shown in FIG. 1, since the photographing means 10 is mounted at a location higher than the road surface, when photographing the road surface and the roadside, the photographing direction thereof is downward relative to the direction parallel to the road surface. In addition, when the measurement vehicle 100 changes its traveling direction on a curved road and the like, since the vehicle body of the measurement vehicle 100 leans to the left or right, the photographing means 10 rotates using its photographing direction as an axis. A height of the photographing means 10 from the road surface, an angle that the photographing direction forms with the direction parallel to the road surface, and an angle at which the photographing means 10 rotates using the photographing direction as an axis are measured by the photographing height and angle measuring unit 11.

The photographing height and angle measuring unit 11 measures a photographing height and angles, for example, using the principles of inertial measurement, using an inertial measurement device such as a combination of an accelerometer and a gyro, or an IMU (Inertial Measurement Unit). For example, the configuration can be such that a height is determined by performing integration on an output value (acceleration) from the accelerometer twice, and each of the above-described angles is determined by performing integration on an output value (angular velocity) from the gyro, but the configuration is not limited thereto. For example, a height can also be determined by laser rangefinding and angles can also be determined using an inclinometer. A positional relationship between the photographing height and angle measuring unit 11 and the photographing means 10 is determined in advance, and a height of the photographing means 10 from the road surface, an angle that the photographing direction forms with the direction parallel to the road surface, and an angle at which the photographing means 10 rotates using the photographing direction as an axis are calculated from changes in the position and angle of the photographing height and angle measuring unit 11. Note that the photographing height and angle measuring unit 11 may be provided in close proximity to the photographing means 10.

The coordinate obtaining device 12 obtains, using a GPS (Global Positioning System) and the like, coordinate information of the position of the measurement vehicle 100 when the photographing means 10 photographs a road image. Note that the configuration may be such that coordinate information obtained by the GPS is corrected using an inertial measurement device such as a gyro.

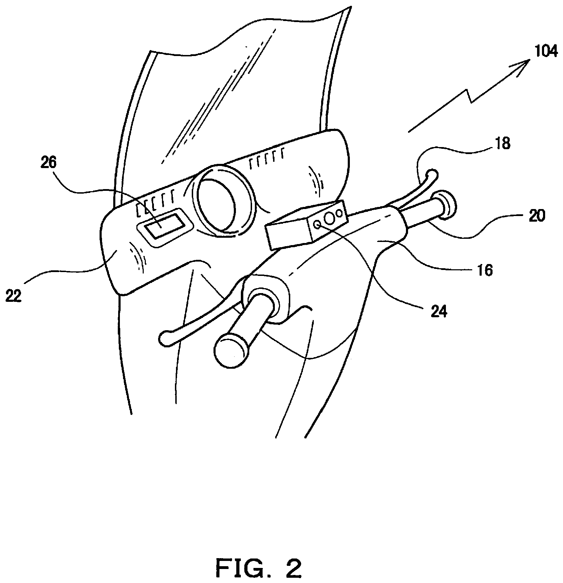

FIG. 2 is a partial perspective view of a drive operating portion 104 of the measurement vehicle 100. In FIG. 2, the drive operating portion 104 is provided with a handlebar 16, a brake 18, an accelerator 20, an instrument panel 22 and the like, which are required to drive the measurement vehicle 100. In addition, the handlebar 16 is provided with an input device 24, and the instrument panel 22 is provided with the rangefinder 26.

The input device 24 is a device used by a driver to input, during driving and the like, instruction information to the control device 28 which will be described later, and includes appropriate switches such as push buttons.

The rangefinder 26 displays the distance traveled by the measurement vehicle 100 based on the number of rotations of the front wheel 102a or the rear wheels 102b and the like. In addition, the rangefinder 26 outputs the distance traveled by the measurement vehicle 100 to the control device 28. Note that in an example of using time but not distance as the photographing time, instead of the distance traveled, the elapsed time from the last photographing which is output from a timer and the like, or photographing time (clock time) is used.

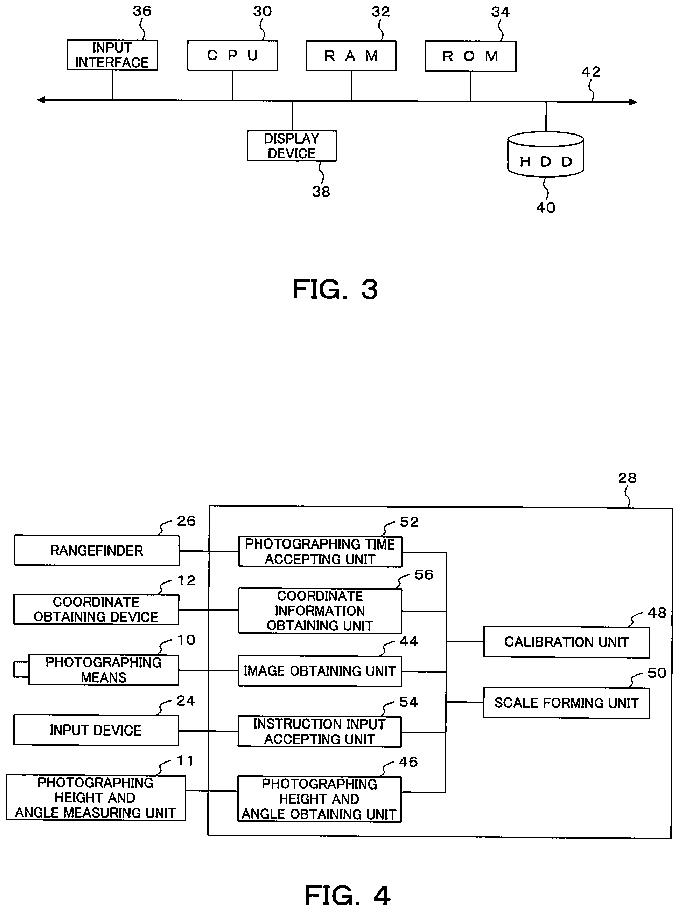

FIG. 3 shows an example of the hardware configuration of a computer configuring the control device 28 contained in the control box 14. In FIG. 3, the control device 28 is configured to include a central processing unit (for example, a CPU such as a microprocessor can be used) 30, a random access memory (RAM) 32, a read-only memory (ROM) 34, an input interface 36, a display device 38, and a hard disk device (HDD) 40. These components are connected to one another through a bus 42.

The CPU 30 controls the operations of respective units which will be described later, based on a control program stored in the RAM 32 or the ROM 34. The RAM 32 mainly functions as a working area for the CPU 30. The ROM 34 stores a control program such as BIOS, and other data used by the CPU 30.

The input interface 36 is an interface for accepting data from the photographing means 10, the photographing height and angle measuring unit 11, the coordinate obtaining device 12, the input device 24, and the rangefinder 26, and passing the data to the CPU 30. Note that a keyboard, a pointing device and the like may be connected to the input interface 36.

The display device 38 is constituted by a liquid crystal display and the like, and displays, for example, a road image obtained by the photographing means 10 and a scale image formed on the road image. As a result, the driver of the vehicle can check a photographed image at all times. Note that the display device 38 does not need to be contained in the control box 14, and can also be installed, for example, on the handlebar 16 and the like. Alternatively, the configuration may be such that in a case where there is no need to check on the scene, instead of providing the display device 38, an output terminal for an external monitor is provided and a check is performed after returning to an office and the like.

The hard disk device 40 is a storage device and stores various data required for a process which will be described later.

FIG. 4 is a functional block diagram of a road measurement device according to the embodiment. In FIG. 4, the road measurement device is configured to include an image obtaining unit 44, a photographing height and angle obtaining unit 46, a calibration unit 48, a scale forming unit 50, a photographing time accepting unit 52, an instruction input accepting unit 54, and a coordinate information obtaining unit 56. These functions are implemented by, for example, the CPU 30 and a program that controls the processing operation of the CPU 30.

The image obtaining unit 44 obtains a road image including images of a road surface of a road and a roadside from the photographing means 10 through the input interface 36. In this case, the image obtaining unit 44 controls, based on an instruction signal output from the photographing time accepting unit 52, the photographing time by outputting a photographing instruction signal to the photographing means 10 so as to photograph a road surface and a roadside every predetermined traveled distance or every predetermined elapsed time since the last photographing. In addition, the image obtaining unit 44 receives coordinate information from the coordinate information obtaining unit 56 which will be described later, and associates the road image with the coordinate information. The road image is stored in the hard disk device 40 and the like. Furthermore, although, in road photographing using a vehicle of related art, a camera iris adjustment is carried out while an operator views photographed video, in photographing using a motorcycle, a small motor tricycle, or a bicycle, an operator cannot carry out an iris adjustment separately. Hence, the camera gain is automatically adjusted. However, in a case where, in particular, a photographing interval is long and thus there is a significant change in brightness between photographed images, the amount of ambient light changes during a period before a next instruction signal is input, causing a problem that a gain adjustment cannot be made in time for photographing. In this case, the image obtaining unit 44 may be configured to allow the photographing means 10 to photograph a road image every time the above-described instruction signal is received, and allow the photographing means 10 to photograph a predetermined number of road images at times between an instruction signal and a next instruction signal. As a result, using the road images photographed between the instruction signal and the next instruction signal, the image obtaining unit 44 computes a change in brightness between the images which is required for a gain adjustment and the like, and controls the brightness of a road image obtained for every instruction signal, based on the change in brightness, and can thereby reduce a change in brightness between photographed images. Note that images photographed between instruction signals do not necessarily need to be recorded, but can be recorded with a gain adjustment result in order to check the process of a gain adjustment.

The photographing height and angle obtaining unit 46 obtains a height of the photographing means 10 from a road surface, an angle that a photographing direction forms with a direction parallel to the road surface, and an angle at which the photographing means 10 rotates using the photographing direction as an axis, from the photographing height and angle measuring unit 11 through the input interface 36. The obtained height of the photographing means 10 from a road surface, angle that a photographing direction forms with a direction parallel to the road surface, and angle at which the photographing means 10 rotates using the photographing direction as an axis, are passed to the calibration unit 48 and the scale forming unit 50.

The calibration unit 48 generates formation parameters to be used when the scale forming unit 50 forms a scale image, for each set of the height of the photographing means 10 from the road surface and the angle that the photographing direction of the photographing means 10 forms with the direction parallel to the road surface which are passed from the photographing height and angle obtaining unit 46. Note that formation parameters can be generated in table or computation format. A procedure for generating formation parameters will be described later.

The scale forming unit 50 forms, using a predetermined processing procedure, a scale image on the road image photographed by the photographing means 10, from changes in the height of the photographing means 10 from the road surface and changes in the angle that the photographing direction of the photographing means 10 forms with the direction parallel to the road surface. Using this scale image, for example, road width and the location and size of a crack in the road can be checked. In the above-described processing procedure, based on the height of the photographing means 10 from the road surface and the angle that the photographing direction forms with the direction parallel to the road surface which are obtained by the photographing height and angle obtaining unit 46, appropriate ones of the formation parameters generated by the calibration unit 48 are selected to form a scale image. In addition, the scale forming unit 50 rotates the scale image in accordance with the angle at which the photographing means 10 rotates using the photographing direction as an axis which is passed from the photographing height and angle obtaining unit 46, such that the scale image is parallel to the road surface in the road image. The scale image and the processing procedure will also be described later.

The photographing time accepting unit 52 accepts a distance traveled by the measurement vehicle 100 from the rangefinder 26 through the input interface 36, and outputs an instruction signal every predetermined traveled distance. The instruction signal is used, for example, to control, using the image obtaining unit 44, the photographing time of the photographing means 10. Note that in the case of using time but not distance as the photographing time, the photographing time accepting unit 52 accepts an output from a timer and the like through the input interface 36 and outputs an instruction signal every predetermined elapsed time since the last photographing.

The instruction input accepting unit 54 accepts, through the input interface 36, instruction information input from the input device 24 by the driver. The instruction information is output to the image obtaining unit 44 to control the operations of the photographing means 10 and the calibration unit 48. In this way, the image obtaining unit 44 performs control, for example, to change the photographing time of the photographing means 10 or stop photographing. In addition, the calibration unit 48 obtains an instruction required to generate the above-described formation parameters.

The coordinate information obtaining unit 56 obtains coordinate information from the coordinate obtaining device 12 through the input interface 36. The obtained coordinate information is passed to the image obtaining unit 44 and is associated with the road image including images of a road surface of a road and a roadside, which is obtained from the photographing means 10. Note that the coordinate information obtaining unit 56 may be configured to obtain coordinate information in synchronization with an instruction signal output from the photographing time accepting unit 52.

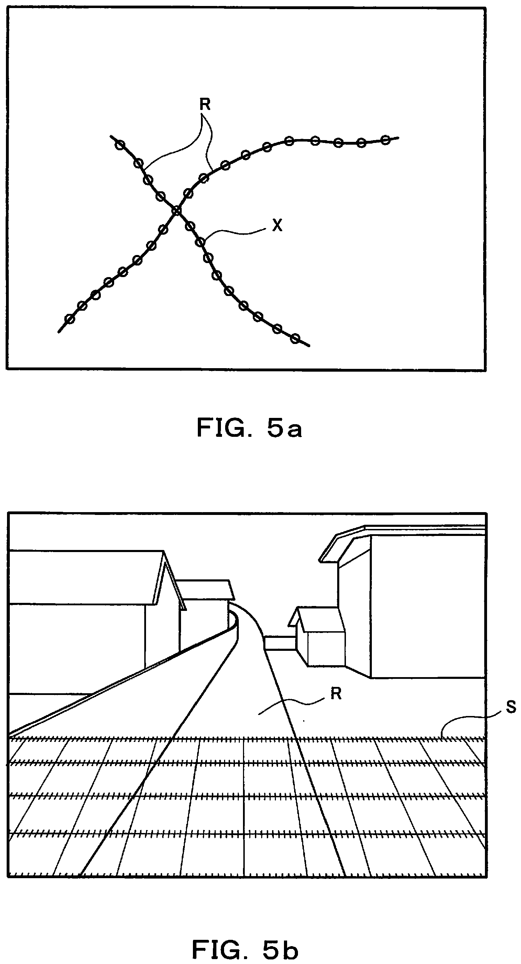

FIGS. 5a and 5b show examples of road measurement results obtained by the road measurement device according to the embodiment. These measurement results are displayed, for example, on the display device 38 by the image obtaining unit 44. Alternatively, data on the measurement results may be provided to another computer through communication or by other methods and displayed on the computer, or may be printed and output by a printing device.

In FIG. 5a, photographing locations by the photographing means 10 are displayed on roads R by white dots. The photographing locations are determined based on coordinate information received by the image obtaining unit 44 from the coordinate information obtaining unit 56. Here, by specifying a point represented by a white dot with a pointing device such as a mouse, a road image obtained at that point is displayed. FIG. 5b shows an example of a road image displayed in a case where a point X in FIG. 5a is specified. In FIG. 5b, a scale image S formed by the scale forming unit 50 is displayed as well as a road image including a road surface of a road R and a roadside.

The scale image S is formed as a grid image where the length photographed at the bottom of the photographed screen is sectioned at intervals of a predetermined length, for example, 1-m intervals, and rectangles of a predetermined size are arranged side by side on a horizontal plane of the road image by vertical lines extending parallel to a depth direction of the image from the respective section points and by horizontal lines intersecting the vertical lines. The intervals between the horizontal lines are also, for example, 1 m. It is preferable to put a scale on the horizontal lines, for example, in intervals of one-tenth (10-cm intervals) or one-fifth (20-cm intervals) of an interval (for example, 1 m) between the vertical lines. In an example of FIG. 5b, a scale in 10-cm intervals is put.

The above-described process of forming a scale image S is performed based on a calibration result on the photographing means 10. Next, calibration on the photographing means 10 will be described below.

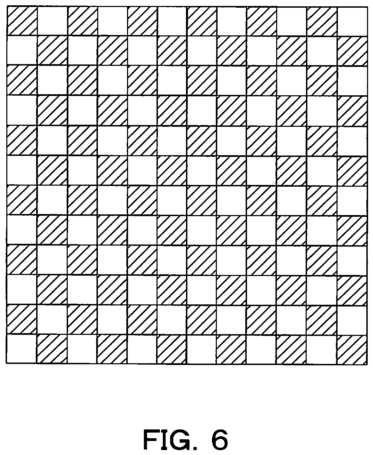

FIG. 6 shows a panel used for calibration of a lens of a camera constituting the photographing means 10. In the panel in FIG. 6, a checkered pattern (a pattern where black and white squares are drawn alternately in the up/down and left/right directions) is formed. This checkered pattern is photographed and correction parameters such as a lens center position, a focal length, and a lens distortion coefficient are calculated by a known method such as a Tsai calibration technique. The calculated correction parameters are used to correct a road image obtained by the image obtaining unit 44 from the photographing means 10. In this way, the image obtaining unit 44 can correct distortion of the road image resulting from camera lens characteristics.

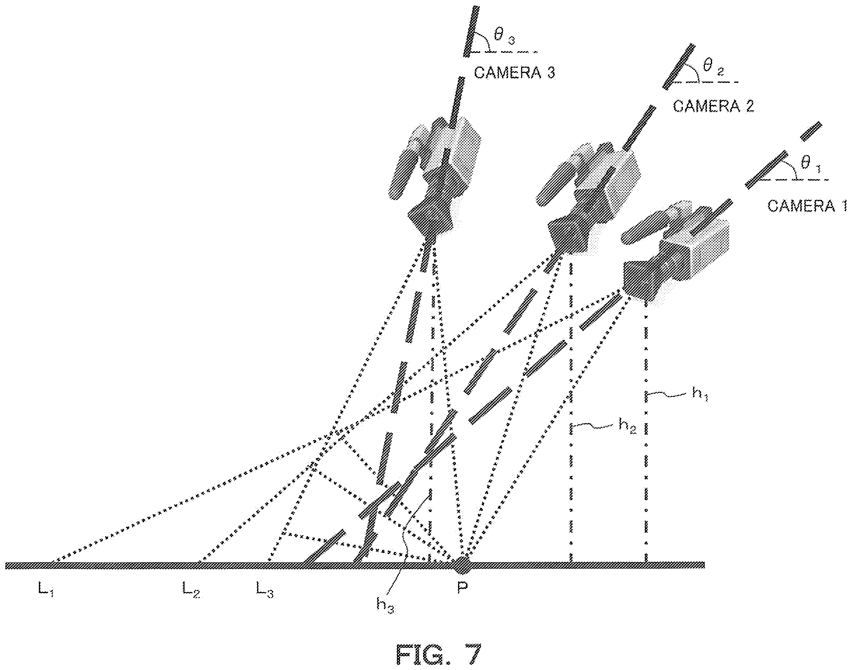

FIG. 7 is an illustrative diagram of a relationship between a height of a camera, which constitutes the photographing means 10, from a road surface and an angle that a photographing direction forms with a direction parallel to the road surface, and a length photographed by the photographing means 10. Here, the length photographed by the photographing means 10 refers to, for example, a photographed length (that fits into the screen) at the bottom of the photographed screen in the example shown in FIG. 5b.

In FIG. 7, a camera 1, a camera 2, and a camera 3 are disposed at different heights and different angles formed by the direction parallel to the road surface. For the camera 1, the height is h1 and the angle formed by the direction parallel to the road surface is θ1; for the camera 2, the height is h2 and the angle formed by the direction parallel to the road surface is θ2; and for the camera 3, the height is h3 and the angle formed by the direction parallel to the road surface is θ3. In this case, the length photographed by the camera 1 is a distance from a base point P which is appropriately determined to L1, the length photographed by the camera 2 is a distance from the base point P to L2, and the length photographed by the camera 3 is a distance from the base point P to L3. When the height from the road surface is fixed, those distances increase as the angle formed by the direction parallel to the road surface decreases. When the angle formed by the direction parallel to the road surface is fixed, those distances increase as the height from the road surface increases. Hence, the size of rectangles of a scale image S formed by the scale forming unit 50 also needs to be changed in accordance with the height from the road surface and the angle formed by the direction parallel to the road surface.

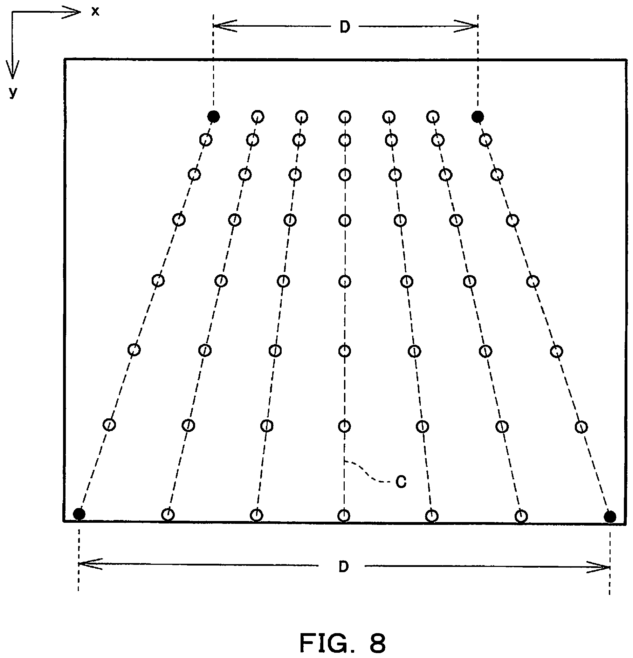

FIG. 8 shows an example of a photographed screen which is photographed by the photographing means 10 when calibration is performed. FIG. 8 shows a photographed screen obtained by photographing, as a pattern for calibration, high intensity reflective sheets and the like placed on the ground and the like at the respective vertices of rectangles of a predetermined size (for example, squares with 1 m sides). The rectangles serve as a scale image. Note that dashed lines in FIG. 8 indicate that the further the dashed lines go in a depth direction of the photographed screen, the shorter each side of rectangle images is photographed, and as a result, the length photographed on the photographed screen is longer. Specifically, for example, a length D between vertices (shown by black dots) at both ends at the bottom of the photographed screen is displayed shorter on the far end side of the photographed screen, and correspondingly, the length that fits in a horizontal direction of the photographed screen is longer. The same also applies to a vertical direction of the photographed screen. As such, how much length of an image fits in the horizontal and vertical directions of the photographed screen and the ratio at which vertices come close to each other going in the depth direction, that is, the inclination of the dashed lines in FIG. 8, are determined by the height of the camera from the road surface and the angle formed by the direction parallel to the road surface which are shown in FIG. 7. Hence, the image shown in FIG. 8 is photographed in a manner such that the height of the camera from the road surface and the angle formed by the direction parallel to the road surface are changed, and the coordinates of the respective vertices at that time are obtained by the calibration unit 48 as the formation parameters of a scale image, for each set of the height and the angle formed by the direction parallel to the road surface. The formation parameters are stored in a storage device such as the hard disk device 40 in table format. In this case, the steps of the height from the road surface and the angle formed by the direction parallel to the road surface are appropriately determined in accordance with accuracy and the like, required for a scale image. The coordinates of each vertex are coordinates on the photographed screen. For example, the coordinates can be represented by x-y coordinates shown in FIG. 8, with an upper left corner of the screen being the origin point. Note that the formation parameters may be in computation format instead of table format.

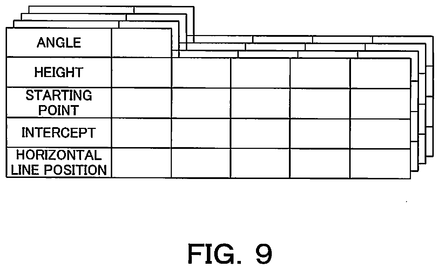

FIG. 9 shows an example of a table of formation parameters generated by the calibration unit 48. In FIG. 9, the "angle" indicates the angle formed by a direction parallel to a road surface, and the "height" indicates the height of the camera from the road surface. The "starting point" indicates the coordinates of the above-described vertices at the bottom of a photographed screen, the "intercept" indicates the coordinates of the points of intersection of a vertical line C (which is a dashed line in FIG. 8) in a scale image drawn at the center of the photographed screen and other vertical lines, and the "horizontal line position" indicates the y-coordinates of the respective vertices. The positions of vertical lines in the scale image are determined using the starting point. The inclinations of the respective vertical lines are determined using the intercept. The positions of horizontal lines are determined using the horizontal line position. Accordingly, the scale forming unit 50 can form a scale image from the above-described formation parameters.

In a processing procedure performed when the scale forming unit 50 forms a scale image, first, appropriate ones of formation parameters generated by the calibration unit 48 are selected based on a height of the photographing means 10 from a road surface and an angle that a photographing direction forms with a direction parallel to the road surface, which are obtained by the photographing height and angle obtaining unit 46. Specifically, since the formation parameters are generated for each set of the height and the angle formed by the direction parallel to the road surface, in the processing procedure formation parameters are selected that coincide with the above-described height and angle formed by the direction parallel to the road surface which are obtained by the photographing height and angle obtaining unit 46 when a road image is photographed by the photographing means 10. Then, using those formation parameters, a scale image is formed. Note that in a case where the height and the angle formed by the direction parallel to the road surface which are obtained by the photographing height and angle obtaining unit 46 have values that do not coincide with any heights and angles formed by the direction parallel to the road surface in the formation parameters, a plurality of formation parameters that approximate the values of the height and the angle formed by the direction parallel to the road surface are selected to form a scale image by an appropriate interpolation process such as a linear interpolation method. In this case, the number of formation parameters to be selected can be appropriately selected in accordance with the accuracy of a scale image and the like.

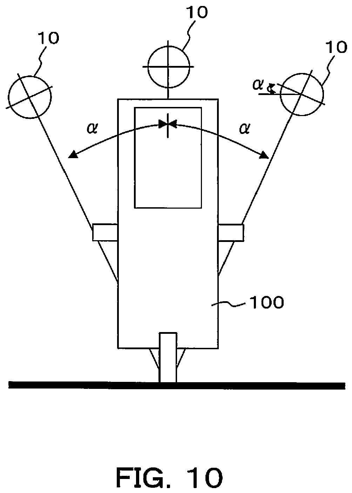

FIG. 10 is an illustrative diagram of movements made by the photographing means 10 that rotates using a photographing direction as an axis when the measurement vehicle 100 changes its traveling direction. Since a motorcycle, a small motor tricycle, or a bicycle is used as the measurement vehicle 100, when the measurement vehicle 100 changes its traveling direction at a curve and the like, the vehicle body leans towards the inside of the curve. Hence, the photographing means 10 rotates using a photographing direction as an axis. In an example of FIG. 10, the vehicle body of the measurement vehicle 100 is in a state of leaning to either the right or left at an angle α, with a contact between the front wheel and a road surface being the center and with the traveling direction as an axis. In this case, the photographing means 10 also rotates about the center of the lens at the angle α using the photographing direction as an axis. Furthermore, a photographed image which is photographed by the photographing means 10 also leans at the angle α. The angle α at which the photographing means 10 rotates using the photographing direction as an axis is measured by the above-described photographing height and angle measuring unit 11, and the photographing height and angle obtaining unit 46 obtains the measured value.

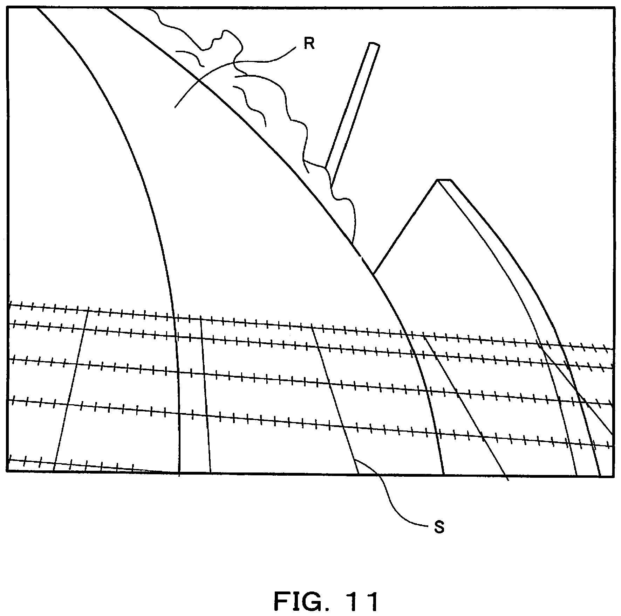

FIG. 11 shows an example of a photographed screen obtained when the photographing means 10 leans to the left at a rotation angle α. The photographed screen includes a scale image S as well as a road image including a road surface of a road R and a roadside. As shown in FIG. 11, when the photographing means 10 leans to the left in a left curve, the road image on the photographed screen leans to the right. Thus, unless the scale image S is allowed to lean to the right in accordance with the leaning of the road image, road width and the like cannot be accurately grasped. Hence, the scale forming unit 50 obtains the rotation angle α of the photographing means 10 from the photographing height and angle obtaining unit 46, and as shown in FIG. 11, the formed scale image S is allowed to rotate to the right at the rotation angle α. In this way, the scale image S can be made parallel to the road surface in the road image, making it possible to accurately grasp road width and the like.

Note that the photographing means 10 may perform photographing in a manner such that, in addition to the height from the road surface and the angle formed by the direction parallel to the road surface, the angle at which the photographing means 10 rotates using the photographing direction as an axis is changed, and then formation parameters may be generated by the calibration unit 48.

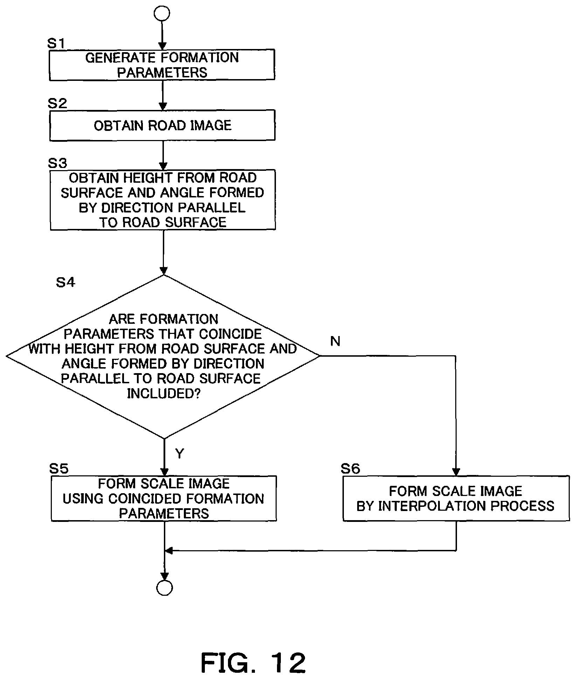

FIG. 12 shows the flow of an exemplary operation of the road measurement device according to the embodiment. In FIG. 12, the calibration unit 48 generates formation parameters by, for example, the method described in FIG. 8 (S1). The image obtaining unit 44 allows the photographing means 10 to photograph a road image at every predetermined time described above, and obtains the road image (S2). At this time, the coordinate information obtaining unit 56 obtains coordinate information of the position where the road image is photographed, from the coordinate obtaining device 12. Furthermore, the photographing height and angle obtaining unit 46 obtains a height of the photographing means 10 from a road surface and an angle that a photographing direction forms with a direction parallel to the road surface, which are used when photographing the road image, from the photographing height and angle measuring unit 11 (S3).

The scale forming unit 50 checks if the formation parameters generated by the calibration unit 48 include formation parameters with a height and an angle formed by the direction parallel to the road surface that coincide with the height and the angle formed by the direction parallel to the road surface which are obtained by the photographing height and angle obtaining unit 46 (S4). If those formation parameters that coincide with the height and the angle formed by the direction parallel to the road surface are included, then a scale image is generated using those formation parameters (S5). On the other hand, if, at S4, those formation parameters that coincide with the height and the angle formed by the direction parallel to the road surface are not included, then a plurality of formation parameters that approximate the values of the above-described height and angle formed by the direction parallel to the road surface are selected to form a scale image by an appropriate interpolation process such as a linear interpolation method (S6).

Note that the above-described program for performing the steps in FIG. 12 can also be stored in a recording medium. Alternatively, the program may be provided by a communication means. In such cases, for example, the above-described program may be interpreted as an invention of "computer-readable recording medium having recorded therein a program".

## Claims

1. A road measurement method, wherein:
photographing means (10) photograph a road surface of a road (R) and a roadside;
scale formation means (50) form, by a predetermined processing procedure, a scale image (S) on a road image photographed by the photographing means (10), from a height of the photographing means (10) from the road surface and an angle (α) that a photographing direction of the photographing means (10) forms with a direction parallel to the road surface,
wherein the scale image (S) is a grid image with vertical lines extending parallel to a depth direction of the image from the respective section points and by horizontal lines intersecting the vertical lines so that rectangles of a predetermined size are arranged side by side on a horizontal plane of the road image,
a measurement vehicle (100) holds the photographing means (10) and the scale formation means (50) and travels on the road (R), the road (R) being a photographing target,
wherein when the measurement vehicle (100) changes its traveling direction, the scale formation means (50) rotates the scale image (S) in accordance with a rotation angle (α) at which the photographing means (10) rotates using the photographing direction as an axis, such that the scale image (S) is parallel to the road surface in the road image; and
a photographing time accepting unit (52) accepts a distance travelled by the measurement vehicle (100) from a rangefinder (26) through an input interface (36) and outputs an instruction signal every predetermined travelled distance, whereby the instruction signal is used to control the photographing time of the photographing means, so as to photograph a road surface and a roadside every predetermined traveled distance.

2. The road measurement method according to claim 1, wherein the processing procedure generates a table that holds formation parameters of a scale image (S), for each set of a height of the photographing means (10) from a road surface and an angle (α) that a photographing direction of the photographing means (10) forms with a direction parallel to the road surface.

3. The road measurement method according to any one of claims 1 to 2 wherein the photographing means (10) photographs a predetermined number of images between the predetermined times, and controls brightness of an image obtained at every predetermined time, based on a change in brightness between the images.

4. The road measurement method according to any one of claims 1 to 3 wherein the method is adapted for implementation in a measurement vehicle (100), which is any one of a motorcycle, a small motor tricycle, and a bicycle.

5. The road measurement method according to any one of claims 1 to 4 wherein the method comprise a step of inputting instruction information to the photographing means (10) during traveling by means of an input device (24).

## Patentansprüche

1. Ein Verfahren zur Vermessung einer Straße, wobei:
fotografische Instrumente (10) eine Straßenoberfläche der Straße (R) und eine Straßenseite aufnehmen;
ein Hilfsmittel zur Formgestaltung eines Maßstabs (50) nach einem vorgegebenen Verarbeitungsverfahren ein Stufenbild (S) auf einem Straßenbild abbildet, das von den fotografischen Instrumenten (10) aufgenommen wurde in Höhe der fotografischen Instrumente (10) gemessen zur Straßenoberfläche und in einem Winkel (α), der zwischen der Aufnahmerichtung der fotografischen Instrumente (10) und einer zur Straßenoberfläche parallelen Bewegungsrichtung entsteht,
wobei das Stufenbild (S) ein Gitterbild ist mit vertikalen Linien, die sich aus den jeweiligen Schnittstellen parallel zu einer Tiefenrichtung des Bildes ausbreiten, und horizontalen Linien, die die vertikalen Linien so schneiden, dass sich Rechtecke einer vorgegebenen Größe auf einer horizontalen Ebene des Straßenbildes aneinander reihen,
wobei ein Vermessungsfahrzeug (100) die fotografischen Instrumente (10) und das Hilfsmittel zur Formgestaltung eines Maßstabs (50) mitführt und sich auf einer Straße (R) fortbewegt, die Straße (R) ein zu fotografierendes Ziel sei,
wobei das Vermessungsfahrzeug (100) seine Bewegungsrichtung ändert, das Hilfsmittel zur Formgestaltung eines Maßstabs (50) das Stufenbild (S) entsprechend einem Rotationswinkel (α) dreht, in welchem die fotografischen Instrumente rotieren, während die Aufnahmerichtung eine Achse darstellt, sodass das Stufenbild (S) parallel zur Straßenoberfläche im Straßenbild ist; und
eine fotografierende, Zeit messende Einheit (52) mit einem Entfernungsmesser (26) durch eine Eingangsschnittstelle (36) eine Entfernung aufnimmt, die von dem Vermessungsfahrzeug (100) zurückgelegt worden ist, und nach jeweils einem vorgegebenen zurückgelegten Entfernungsabschnitt ein Weisungssignal ausgibt, wobei das Weisungssignal dazu benutzt wird, die Aufnahmezeit der fotografischen Instrumente so zu steuern, dass die Straßenoberfläche und die Straßenseite nach jeweils einem vorgegebenen zurückgelegten Entfernungsabschnitt fotografiert werden.

2. Das Verfahren zur Vermessung einer Straße gemäß dem Anspruch 1, wobei das vorgegebene Verarbeitungsverfahren eine Tabelle erstellt, die Formgestaltungsparameter eines Stufenbilds (S) enthält für jede Höheneinstellung der fotografischen Instrumente (10) gemessen zu einer Straßenoberfläche und in einem Winkel (α), der zwischen der Aufnahmerichtung der fotografischen Instrumente (10) und einer zur Straßenoberfläche parallelen Bewegungsrichtung entsteht.

3. Das Verfahren zur Vermessung einer Straße gemäß einem der Ansprüche 1 bis 2, wobei die fotografischen Instrumente (10) eine vorgegebene Anzahl von Bildern zwischen den vorgegebenen Zeitpunkten aufnehmen und die Helligkeit eines Bildes regeln, das zu jedem vorgegebenen Zeitpunkt aufgenommen wird, basierend auf einer Veränderung der Helligkeit der Bilder.

4. Das Verfahren zur Vermessung einer Straße gemäß einem der Ansprüche 1 bis 3, wobei das Verfahren zur Umsetzung in einem Vermessungsfahrzeug (100) geeignet ist, das irgendeine Art eines Kraftfahrzeuges, eines kleinmotorigen Dreiradkraftfahrzeuges und eines Zweirads ist.

5. Das Verfahren zur Vermessung einer Straße gemäß einem der Ansprüche 1 bis 4, wobei das Verfahren einen Schritt zur Eingabe der Weisungsinformation an die fotografischen Instrumente (10) während der Fortbewegung durch ein Hilfsmittel einer Eingabevorrichtung (24) enthält.

## Revendications

1. Méthode de mesure de route, dans laquelle :
des moyens de photographie (10) photographient une surface de route d'une route (R) et d'un bas-côté ;
des moyens de formation de graduation (50) forment, par une procédure de traitement prédéterminée, une image à l'échelle (S) sur une image de route photographiée par les moyens de photographie (10), à partir d'une hauteur des moyens de photographie (10) issue de la surface de route et d'un angle (α) qu'une direction de photographie des moyens de photographie (10) forme avec une direction parallèle à la surface de la route,
dans laquelle l'image à l'échelle (S) est une image quadrillée avec des lignes verticales s'étendant parallèlement à une direction de profondeur de l'image à partir des points de section respectifs et par des lignes horizontales faisant intersection avec les lignes verticales de sorte que des rectangles d'une taille prédéterminée sont disposés côte à côte sur un plan horizontal de l'image de route ;
un véhicule de mesure (100) détient les moyens de photographie (10) et les moyens de formation de graduation (50), et se déplace sur la route (R), la route (R) étant une cible de photographie,
dans laquelle le véhicule de mesure (100) change sa direction de trajet, les moyens de formation de graduation (50) font tourner l'image à l'échelle (S) selon un angle de rotation (α) sur lequel les moyens de photographie (10) font rotation en utilisant la direction de photographie comme un axe tel que l'image à l'échelle (S) est parallèle à la surface de route dans l'image de route ; et
une unité d'acceptation du temps de photographie (52) accepte une distance parcourue par le véhicule de mesure (100) à partir d'un télémètre (26) à travers une interface d'entrée (36) et sort un signal d'instruction à chaque distance parcourue prédéterminée, selon quoi le signal d'instruction est utilisé pour commander le temps de photographie des moyens de photographie, de manière à photographier une surface de route et un bas-côté à chaque distance parcourue prédéterminée.

2. Méthode de mesure de route selon la revendication 1, dans laquelle la procédure de traitement génère un tableau qui détient des paramètres de formation d'une image à l'échelle (S), pour chaque ensemble d'une hauteur des moyens de photographie (10) à partir d'une surface de route et d'un angle (α) qu'une direction de photographie des moyens de photographie (10) forme avec une direction parallèle à la surface de la route.

3. Méthode de mesure de route selon une quelconque des revendications 1 à 2, dans laquelle les moyens de photographie (10) photographient un nombre prédéterminé d'images entre les heures prédéterminées, et contrôlent la luminosité d'une image obtenue à chaque heure prédéterminée, en se basant sur un changement de luminosité entre les images.

4. Méthode de mesure de route selon une quelconque des revendications 1 à 3, dans laquelle la méthode est adaptée à l'implémentation dans un véhicule de mesure (100), qui est soit une motocyclette, soit un petit tricycle à moteur, soit une bicyclette.

5. Méthode de mesure de route selon une quelconque des revendications 1 à 4, dans laquelle la méthode comprend une étape de saisie d'informations d'instructions relatives aux moyens de photographie (10) pendant le trajet au moyen d'un dispositif de saisie (24).
